# EUROPEAN PATENT APPLICATION

(11) **EP 2 214 241 A1**
(43) Date of publication of application: **04.08.2010**
(21) Application number: 08844767.7
(22) Date of filing: 23.10.2008
(51) Int. Cl.: H01M 8/02, C08K 5/14, C08K 5/3492, C08L 27/12, C08L 27/16, H01M 8/10

(54) **FLUORORUBBER COMPOSITION FOR CELL SEALS OF FUEL CELLS**

(30) Priority: 02.11.2007 JP 2007286001
(71) Applicant: NOK Corporation, Minato-ku Tokyo 105-8585 (JP)
(72) Inventor: KASHIHARA, Takayuki, Fujisawa-shi Kanagawa 251-0042 (JP)
(74) Representative: HOFFMANN EITLE
(86) International application number: PCT/JP2008/069200
(87) International publication number: WO 2009/057499

(57) **Abstract**

It is an object of the present invention to provide a fluororubber composition for cell seals of fuel cells, which can improve quality, productivity, etc. of a cell seal of a fuel cell by crosslinking a burr formed by an air vent area in the molding process for producing a cell seal of a fuel cell and thereby preventing separation of a fuel cell gasket. The fluororubber composition for cell seals of fuel cells of the present invention comprises a peroxide-crosslinkable fluorine-containing rubber (A) having a fluorine content of not less than 64% by weight and having a crosslinking site derived from a bromine-containing and/or iodine-containing compound, an organic peroxide (B) in an amount of 0.3 to 6 parts by weight and a polyfunctional group monomer (C) in an amount of 1 to 10 parts by weight, said amount of each of the component (B) and the component (C) being based on 100 parts by weight of the fluorine-containing rubber (A), and is **characterized in that** the fluorine-containing rubber (A) contains one or more fluorine-containing olefins and one or more fluorine-containing dienes of 4 to 10 carbon atoms, and the total amount of the fluorine-containing dienes of 4 to 10 carbon atoms is in the range of 0.01 to 10 parts by weight based on 100 parts by weight of the total amount of the fluorine-containing olefins.

## Description

### TECHNICAL FIELD

The present invention relates to a fluororubber composition for cell seals of fuel cells and a cell seal of a fuel cell using the composition. More particularly, the invention relates to a fluororubber composition for cell seals of fuel cells, which is capable of improving quality, productivity, etc. of cell seals of fuel cells, and a cell seal of a fuel cell having a fuel cell gasket obtained by crosslinking the composition.

### BACKGROUND ART

In the production of a cell seal of a fuel cell, a method comprising forming a fuel cell gasket and then bonding the fuel cell gasket to a resin film or a carbon separator using an adhesive, a method comprising integrally molding a fuel cell gasket and a resin film or a carbon separator, etc. are known, and from the viewpoints of quality and the number of steps, the integral molding method is preferable.

Taking into account overall properties of heat resistance, oil resistance, liquid resistance (water, acid), low gas permeability and the like, the cell seal of a fuel cell preferably has a fuel cell gasket obtained by crosslinking a composition containing a fluorine-based rubber with a peroxide (see patent documents 1 to 3). The fuel cell gasket is narrow and long just like a labyrinth, and therefore, it is very difficult to charge a liquid composition containing a fluorine-based rubber into the gasket through one inlet. Then, the cavity prior to the formation of a fuel cell gasket is provided with gates for charging the composition, which are formed at plural positions, and an air vent for preventing molding failures due to remaining of air or contamination with a volatile gas, which is formed at the position where the composition charged through the gates join, and also in the fuel cell gasket after crosslinking, the air vent remains as it is and becomes a "burr".

When a fluorine-based rubber having been crosslinked with a peroxide is used for a fuel cell gasket in the production of the fuel cell gasket by the integral molding method, the burr becomes uncrosslinked and has tack, so that separation of the fuel cell gasket from a resin film or a carbon separator is liable to take place. When a fluorine-based rubber having been crosslinked with a polyol is used for a fuel cell gasket, such a problem does not occur, but this rubber is inferior to the peroxide-crosslinked fluorine-based rubber in acid resistance.
Patent document 1: Japanese Patent Laid-Open Publication No. 243327/2005
Patent document 2: Japanese Patent Laid-Open Publication No. 250520/2004
Patent document 3: Japanese Patent Laid-Open Publication No. 140196/2005

### DISCLOSURE OF THE INVENTION

### PROBLEM TO BE SOLVED BY THE INVENTION

The present invention is intended to solve such a problem associated with the prior art as described above, and it is an object of the invention to provide a fluororubber composition for cell seals of fuel cells, which can improve quality, productivity, etc, of a cell seal of a fuel cell by crosslinking a burr formed by an air vent area in the molding process for producing a cell seal of a fuel cell and thereby preventing separation of a fuel cell gasket from a resin film or a carbon separator.

It is another object of the invention to provide a cell seal of a fuel cell, which has a fuel cell gasket obtained by crosslinking the fluororubber composition for cell seals of fuel cells and is excellent in productivity.

### MEANS TO SOLVE THE PROBLEM

In order to solve the above problem, the present inventors have earnestly studied, and as a result, they have found that in order to improve quality and productivity of a cell seal of a fuel cell, it is effective that a fluororubber composition for cell seals of fuel cells, which comprises a fluorine-containing rubber having a crosslinked structure and having been imparted with normal pressure crosslikability by adding a fluorine-containing diene in addition to a fluorine-containing olefin in the polymerization step for forming a fluororubber, an organic peroxide and a polyfunctional group monomer, is used for a cell seal of a fuel cell. Thus, the present inventors have accomplished the present invention.

That is to say, the fluororubber composition for cell seals of fuel cells according to the present invention is a fluororubber composition comprising:
a peroxide-crosslinkable fluorine-containing rubber (A) having a fluorine content of not less than 64% by weight and having a crosslinking site derived from a bromine-containing and/or iodine-containing compound,
an organic peroxide (B) in an amount of 0.3 to 6 parts by weight,
   and
a polyfunctional group monomer (C) in an amount of 1 to 10 parts by weight,
   said amount of each of the component (B) and the component (C) being based on 100 parts by weight of the fluorine-containing rubber (A),
   wherein the fluorine-containing rubber (A) contains one or more fluorine-containing olefins and one or more fluorine-containing dienes of 4 to 10 carbon atoms, and
   the total amount of the fluorine-containing dienes of 4 to 10 carbon atoms is in the range of 0.01 to 10 parts by weight based on 100 parts by weight of the total amount of the fluorine-containing olefins.

At least one of the fluorine-containing dienes of 4 to 10 carbon atoms may be represented by the formula 1:

CF₂=CX-(Y)ₙ-CZ=CF₂ (1)

wherein X and Z are each independently a hydrogen atom or a fluorine atom, n is an integer of 0 or 1, and Y is ah oxygen atom, a difluoromethylene group of 1 to 6 carbon atoms, a perfluorocycloalkylene group of 4 to 6 carbon atoms or a divalent group represented by the formula 2:

-O-(CF₂O)ₓ-(CF₂CF₂O)_{y}-(CF₂CF(CF₃)O)_{z}- (2)

wherein x, y and z are each an integer of 0 to 2 and are numbers satisfying the condition of 0<x+y+z≤2.
At least one of the fluorine-containing olefins may be represented by the formula 3:

CF₂=CXY (3)

wherein X is a hydrogen atom or a fluorine atom, and Y is a hydrogen atom, a chlorine atom, a fluorine atom, a trifluoromethyl group, a difluoromethyl group, a perfluoroalkoxy group of 1 to 3 carbon atoms or a group represented by the formula 4, with the proviso that when X is hydrogen, Y is also hydrogen,

-(CF₂)ₘ-COOM (4)

wherein m is an integer of 0 to 3, and M is a hydrogen atom, an alkyl group of 1 to 4 carbon atoms, a sodium atom or a potassium atom.
At least one of the fluorine-containing olefins may be vinylidene fluoride.

The cell seal of a fuel cell having a fuel cell gasket according to the present invention is obtained by crosslinking the above-mentioned fluororubber composition for cell seals of fuel cells.

### EFFECT OF THE INVENTION

By the use of the fluororubber composition for cell seals of fuel cells according to the invention for a cell seal of a fuel cell, separation of a fuel cell gasket from a resin film or a carbon separator can be prevented, and quality, productivity, etc. of a cell seal of a fuel cell can be improved. Moreover, production of a cell seal of a fuel cell having stable quality becomes possible.

In Japanese Patent Publication No. 31725/1986, a process for preparing a fluorine-containing polymer containing a fluorine-containing olefin and a fluorine-containing diene is disclosed, but there is neither disclosure nor suggestion of such a problem to be solved by the invention, such a means to solve the problem and such excellent effects of the invention as mentioned above.

### BEST MODE FOR CARRYING OUT THE INVENTION

The fluororubber composition for cell seals of fuel cells according to the invention is described in detail hereinafter.

### Fluororubber composition for cell seals of fuel cells

The fluororubber composition for cell seals of fuel cells according to the invention comprises a peroxide-crosslinkable fluorine-containing rubber (sometimes referred to as a "fluorine-containing rubber" or "FKM") (A), an organic peroxide (B) and a polyfunctional monomer (C), which are described below.

In a preferred embodiment of the fluororubber composition for cell seals of fuel cells of the invention, a reinforcing agent, such as carbon black, white carbon or silane, a bituminous fine powder, a flattening filler and other additives (e.g., wax component) may be contained.

### (A) Fluorine-containing rubber (FKM)

The fluorine-containing rubber (FKM) (A) for use in the invention is a peroxide-crosslinkable copolymer having a fluorine content of not less than 64% by weight, preferably 64 to 70% by weight, and having a crosslinking site derived from a bromine-containing and/or iodine-containing compound, wherein one or more fluorine-containing olefins and one or more fluorine-containing dienes of 4 to 10 carbon atoms are contained in the fluorine-containing rubber, and the total amount of the fluorine-containing dienes of 4 to 10 carbon atoms is in the range of 0.01 to 10 parts by weight, preferably 0.1 to 5 parts by weight, more preferably 0.5 to 1.5 parts by weight, based on 100 parts by weight of the total amount of the fluorine-containing olefins.

In the preparation process of the fluorine-containing rubber (A), the fluorine-containing olefin undergoes polymerization together with the fluorine-containing diene of 4 to 10 carbon atoms, etc., and therefore, the fluorine-containing rubber (A) has a three-dimensional crosslinked structure. Further, the fluorine-containing rubber (A) has a cross linking site derived from a bromine-containing and/or iodine-containing compound, and therefore, the fluorine-containing rubber (A) is also a copolymer crosslinkable with a peroxide at normal pressure.

By vulcanization molding of the fluororubber composition for cell seals of fuel cells which comprises such a fluorine-containing rubber and the later-described organic peroxide and polyfunctional group monomer, the fluorine-containing rubber (A) has a properly crosslinked structure. On that account, a burr that is formed by an air vent area in the molding process for producing a cell seal of a fuel cell can be also crosslinked though the burr was uncrosslinked and had tack in the past. By virtue of the crosslinking, separation of a fuel cell gasket from a resin film or a carbon separator can be prevented in the course of formation of a cell seal of a fuel cell, and hence, quality, productivity, etc. of a cell seal of a fuel cell can be improved. Moreover, production of a cell seal of a fuel cell having stable quality becomes possible.

### Fluorine-containin diene of 4 to 10 carbon atoms

The fluorine-containing diene of 4 to 10 carbon atoms is fluorohydrocarbon of 4 to 10 carbon atoms having one or more fluorine atoms in its structure and containing two double bonds in the carbon chain. This fluorine-containing diene of 4 to 10 carbon atoms may have a cyclic structure and may have other unsaturated bonds.

By copolymerizing such a fluorine-containing diene of 4 to 10 carbon atoms and a fluorine-containing olefin, the resulting copolymer can have a three-dimensional crosslinked structure, and a stronger crosslinked product can be obtained. This crosslinked product (polymer) can more strongly crosslink a "burr" that is formed by an air vent area in the molding process for producing a cell seal of a fuel cell, together with an organic peroxide, a polyfunctional monomer and the like. On that account, the fluorine-containing diene can be favorably used as a material of a peroxide-crosslinkable fluorine-containing rubber contained in a fluororubber composition for cell seals of fuel cells.

At least one of the fluorine-containing dienes of 4 to 10 carbon atoms is a monomer represented by the following formula 5.

CF₂=CX-(Y)ₙ-CZ=CF₂ (5)

In the formula 5, X and Z are each independently a hydrogen atom or a fluorine atom, n is an integer of 0 or 1, Y is an oxygen atom, a difluoromethylene group of 1 to 4 carbon atoms, a perfluorooyoloalkylene group of 4 to 6 carbon atoms such as a 1,2-perfluorocyclobutylene group, or a divalent group represented by the following formula 6.

-O-(CF₂O)ₓ-(CF₂CF₂O)_{y}-(CF₂CF(CF₃)O)_{z}- (6)

In the formula 6, x, y and z are each an integer of 0 to 2 and are numbers satisfying the condition of 0<x+y+z≤2.
Examples of such fluorine-containing dienes of 4 to 10 carbon atoms include CF₂=CF-CF=CF₂, CF₂=CF-(CF₂)₄-CF=CF₂, CF₂=CF-CH=CF₂, CF₂=CH-CH=CF₂, CF₂=CF-O-(CF₂)₂-O-CF=CF₂, CF₂=CF-CF₂-CF=CF₂, CF₂=CF-O-(CF₂)₂-O-CF₂-CF(CF₃)-O-CF=CF₂ and
CF₂=CF-O-CF₂-CF(CF₃)-O-CF₂-CF(CF₃)-O-CF=CF₂.

These fluorine-containing dienes may be used singly or in combination of two or more kinds.

When the total amount of the fluorine-containing dienes of 4 to 10 carbon atoms in the fluorine-containing rubber (A) is in the above range based on 100 parts by weight of the total amount of the below-described fluorine-containing olefins, quality and productivity of the resulting cell seal of a fuel cell tend to be improved. If the total amount thereof is less than the lower limit of the above range, the burr is not crosslinked sufficiently, and therefore, the quality and the productivity tend to be lowered. On the other hand, if the total amount thereof exceeds the upper limit of the above range, lowering of moldability due to increase of polymer viscosity and rise of cost due to addition of excess fluorine-containing dienes tend to occur.

### Fluorine-containing olefin

The fluorine-containing olefin is fluorohydrocarbon having one fluorine atom in its structure and containing one double bond in the carbon chain.

At least one of the fluorine-containing olefins is desirably a monomer represented by the following formula 7.

CF₂=CXY (7)

In the formula 7, X is a hydrogen atom or a fluorine atom, and Y is a hydrogen atom, a chlorine atom, a fluorine atom, a perfluoroalkyl group of 1 to 3 carbon atoms such as a trifluoromethyl group, a difluoromethyl group, a perfluoroalkoxy group of 1 to 3 carbon atoms, or a group represented by the following formula 8, with the proviso that when X is hydrogen, Y is also hydrogen.

-(CF₂)ₘ-COOM (8)

In the formula (8), m is an integer of 0 to 3, and M is a hydrogen atom, an alkyl group of 1 to 4 carbon atoms, a sodium atom or a potassium atom.
Examples of such fluorine-containing olefins include vinylidene fluoride, trifluoroethylene, trifluorochloroethylene, tetrafluoroethylene, hexafluoropropylene, pentafluoropropylene, hexafluoropropylene, perfluoroalkyl vinyl ether (e.g., perfluoromethyl vinyl ether) and perfluoroalkoxyvinyl ether (e.g., perfluoroethoxyvinyl ether). Of these fluorine-containing olefins, vinylidene fluoride, tetrafluoroethylene and hexafluoropropylene are preferably used from the viewpoints of general purpose type and cost.

These fluorine-containing olefins may be used singly or in combination of two or more kinds.

### Monomer having crosslinking site

The monomer having a crosslinking site is unsaturated fluorohydrocarbon of 2 to 8 carbon atoms and is a compound which may have one or more ether linkages in a group and has bromine or iodine at the end. This monomer is contained as a monomer for a crosslinking site in a small amount, e.g., 0.01 to 3 % by mol based on 100% by mol of the total amount of the fluorine-containing olefins and the fluorine-containing dienes in the fluorine-containing rubber (A). When the monomer is used in an amount of this range, an excellent fluorine-containing rubber (A) having proper degree of crosslinking and a good balance of sufficient low-temperature resistance, fuel oil resistance, etc. tends to be obtained.

Examples of such monomers having a crosslinking site include 1-bromo-2-iodoperfluoroethane and 1-bromo-3-iodoperfluoroethane.

### Fluorine-containing rubber (A)

The fluorine-containing rubber (A) is solid or liquid, and its molecular weight can be properly determined taking in to account molding processability, various mechanical properties, etc. of the fluorine-containing rubber (A). However, the intrinsic viscosity [η] (measuring method: determination from a drop time at 35°C using an Ubbellohde viscometer) as an indication of a molecular weight is desired to be in the range of usually 0.2 to 5.0 dl/g, preferably 0.4 to 3.0 dl/g, from the viewpoint of molding processability. The Mooney viscosity (in accordance with JIS K6300, ML_{1+10,} 121°C) of the fluorine-containing rubber (A) is in the range of usually 10 to 120, preferably 20 to 80, from the viewpoint of rubber processing, though it is not specifically restricted.

Such a peroxide-crosslinkable fluorine-containing rubber (A) is prepared by polymerizing one or more kinds of the fluorine-containing olefins and one or more kinds of the fluorine-containing dienes of 4 to 10 carbon atoms through solution, suspension or emulsion polymerization in the presence of an iodine compound and a radical generation source.

The fluorine-containing rubber (A) has a fluorine content of not less than 64% by weight, preferably 64 to 70% by weight. When the fluorine content is in the above range, the resulting cell seal of a fuel cell has high screening property, water resistance and low-extraction property, is capable of sealing with small reaction force and tends to have a good balance of these properties. If the fluorine content in the fluorine-containing rubber (A) is less than the lower limit of the above range, screening property and water resistance of the resulting cell seal of a fuel cell tend to be deteriorated though sealing property (compression set) thereof becomes good. If the fluorine content is more than the upper limit of the above range, small reaction force property and sealing property (compression set) of the resulting cell seal of a fuel cell tend to be deteriorated though screening property and water resistance thereof become good. In the present invention, the fluorine content is calculated from the amount of fluorine contained in each monomer to be polymerized, by the use of F¹⁹-NMR method.

### (B) Organic peroxide

As the organic peroxide (B), an organic peroxide generally employable for rubbers can be used without any restriction, and it is used in an amount of 0.3 to 6 parts by weight, preferably 0.5 to 5 parts by weight, based on 100 parts by weight of the fluorine-containing rubber (A). If the amount of the organic peroxide added is less than 0. 3 part by weight, satisfactory crosslink density is not obtained. If the amount thereof exceeds 6 parts by weight, a vulcanized molded product is not obtained because of foaming, and even if it is obtained, rubber elasticity and elongation are lowered.

Examples of the organic peroxides (B) include t-butyl peroxide, dicumyl peroxide, t-butyl cumyl peroxide,
1,1-di(t-butylperoxy)-3,3,5-trimethylcyclohexane,
2,5-dimethyl-2,5-di(t-butylperoxy)hexane,
2,5-dimethyl-2,5-di(t-butylperoxy)hexyne-3,
1,3-di(t-butylperoxyisopropyl)benzene,
2,5-dimethyl-2,5-(benzoylperoxy)hexane, t-butyl peroxybenzoate,
t-butyl peroxyisopropyl carbonate and
n-butyl-4,4-di(t-butylperoxy)valerate. These organic peroxides (B) may be used singly or in combination of two or more kinds.

### (C) Polyfunctional monomer

As the polyfunctional monomer (C), a polyfunctional monomer generally employable for rubbers can be used without any restriction, and it is used in an amount of 1 to 10 parts by weight, preferably 2 to 8 parts by weight, based on 100 parts by weight of the fluorine-containing rubber (A). If the amount of the polyfunctional monomer added is less than 1 part by weight, satisfactory crosslink density is not obtained. If the amount thereof exceeds 10 parts by weight, a vulcanizedmolded product is not obtainedbecause of foaming, and even if it is obtained, rubber elasticity and elongation are lowered.

Examples of the polyfunctional monomers (C) include triallyl isocyanurate, triallyl cyanurate, triallyl trimellitate, trimethylolpropane trimethacrylate and N,N'-m-phenylene bismaleimide. These polfunctional monomers (C) may be used singly or in combination of two or more kinds.

### Other components

To the fluororubber composition for cell seals of fuel cells, compounding ingredients generally used in the rubber industry, e. g., reinforcing agents, such as carbon black and white carbon, fillers, such as talc, clay, graphite and calcium silicate, processing aids, such as stearic acid, palmitic acid and paraffin wax, acid acceptors, such as zinc oxide, magnesium oxide and magnesium hydroxide, anti-aging agents, and plasticizers, may be properly added as rubber compounding ingredients, when necessary, before use.

For example, when a reinforcing agent such as carbon black (trade name: Thermax N990, available from Cancarb Ltd.) or white carbon is used, it is used in an amount of usually 0.1 to 20 parts by weight, preferably about 0.1 to 5 parts by weight, based on 100 parts by weight of the fluorine-containing rubber (A). If the amount thereof exceeds the upper limit of the above range, hardness and compression reaction force become excessively great and the fluororubber composition tends to become practically unusable, though compression set, resistance to gas permeation and extraction property are good.

In order to obtain a fluororubber composition for cell seals of fuel cells having such compounding ratios, the above components are compounded and then stirred and kneaded when necessary under such temperature pressure conditions that the fluororubber composition for cell seals of fuel cells is not vulcanized (not crosslinked), such as conditions of ordinary temperature and normal pressure.

In the stirring and kneading, a kneading machine, such as intermixer, kneader or Banbury mixer, an open roll or the like is employable.

### Cell seal of fuel cell

The cell seal of a fuel cell has a fuel cell gasket obtained by crosslinking the fluororubber composition for cell seals of fuel cells according to the invention.

The hardness (durometer A, in accordance with JIS K-6253) of the fuel cell gasket is less than 60, preferably 40 to 55. When the hardness is in this range, the reaction force of the cell seal of a fuel cell is not too great and is moderate, a resin film and a carbon separator are free from breakage or the like to make perfect sealing possible, and the cell seal is excellent in cell seal properties, so that such a hardness is desirable. If the hardness of the fuel cell gasket is not less than 60, the reaction force of the cell seal of a fuel cell is too great, breakage of a carbon film or a carbon separator is very liable to occur, and there is difficulty in perfect sealing (closure), so that the cell seal tends to become unsuitable as a cell seal.

### Preparation of fluororubber composition for cell seals of fuel cells

Preparation of the fluororubber composition for cell seals of fuel cells is carried out by kneading the components using a kneading machine, such as intermixer, kneader or Banbury mixer, an open roll or the like. Vulcanization is carried out by heating the composition generally at a temperature of 150 to 200°C for about 3 to 60 minutes using an injection molding machine, a compression molding machine, a vulcanizing press or the like, and if necessary, secondary vulcanization wherein the composition is heated at about 150 to 250°C for about 1 to 24 hours is carried out. When necessary, the vulcanization may be carried out under pressure, for example, under a pressure of 1 to 500 MPa, and may be carried out by charging the composition in a given mold.

In this crosslinking reaction, bromine or iodine in the fluorine-containing rubber (A) is eliminated by the organic peroxide, and at the thus eliminated place, the polyfunctional monomer reacts with the fluorine-containing rubber (A) that is a crosslinked product and is bonded thereto, whereby a crosslinked product having a stronger crosslinked structure can be formed.

### EXAMPLES

The present invention is further described with reference to the following examples, but it should be construed that the invention is in no way limited to those examples.

In the examples and the comparative examples, properties were tested or evaluated in the following manner.

### Test/evaluation method

### Ordinary state properties

### (1) Hardness

Hardness was tested in accordance with JIS K-6253 using a durometer A.

### (2) Tensile strength (MPa)

Tensile strength was tested in accordance with JIS K-6251 using a No. 3 dumbbell.

### (3) Elongation (%)

Elongation was tested in accordance with JIS K-6251 using a No. 3 dumbbell.

### Acid resistance

(1) A specimen was immersed in a 50% H₃PO₄ aqueous solution at 150°C, and after 1000 hours, the fluororubber surface profile was observed. A specimen with no change of surface profile was evaluated as AA, and a specimen with a change of surface profile was evaluated as BB. As the specimen, a 2 mm sheet obtained by compression molding was used.

### Moldability

(1) A specimen free from tack in an air-vent area and free from separation of a rubber was evaluated as AA, and a specimen having at least one of them was evaluated as BB.

### Fluorine-containing robber (FKM)

### Reparation Example 1 (FKM1)

57 Parts by weight of vinylidene fluoride, 23 parts by weight of tetrafluoroethylene, 20 parts by weight of hexafluoropropylene, 1 part by weight of CF₂=CF-CF=CF₂ as a fluorine-containing diene and 1-bromo-2-iodoperfluoroethane (0.5% by mol based on 100% by mol of the total of the above vinylidene fluoride, tetrafluoroethylene, hexafluoropropylene and fluorine-containing diene) were subjected to emulsion polymerization in the presence of an iodine compound and a radical generation source to obtain a fluorine-containing rubber (FKM1). Composition of FKM1 is set forth in Table 1.

### Preparation Example 2 (FKM2)

A fluorine-containing rubber (FKM2) was obtained in the same manner as in Preparation Example 1, except that 57 parts by weight of vinylidene fluoride, 23 parts by weight of tetrafluoroethylene, 20 parts by weight of hexafluoropropylene and 1-bromo-2-iodoperfluoroethane (0.5% by mol based on 100% by mol of the total of the above vinylidene fluoride, tetrafluoroethylene and hexafluoropropylene) were used. Composition of FKM2 is set forth in Table 1.

### Example 1

Composition of blend (Table 2)

| | |
|---|---|
| FKM1 | 100 parts by weight |
| Carbon black (N990) | 2 parts by weight |
| 2,5-Dimethyl-2,5-di(t-butylperoxy)hexane | |
| | 0.5 part by weight |
| Triallyl isocyanurate | 2 parts by weight |

A blend of the above composition was kneaded by a kneader and an open roll. Vulcanization molding of the resulting fluorine-containing rubber composition was carried out by primary vulcanization of 170°C and 20 minutes using a vulcanizing press and secondary vulcanization of 160°C and 2 hours using a hot oven, to obtain an integrally molded article of a vulcanized sheet and a resin film having a size of 150 mm × 150 mm × 2 mm (thickness).

Ordinary state properties of the resulting integrally molded article of a vulcanized sheet and a resin film were measured in accordance with JIS K 6253 and JISK 6251, and acid resistance and moldability thereof were also evaluated. The results are set forth in Table 3.

### Comparative Example 1

An integrally molded article of a vulcanized sheet and a resin film was obtained in the same manner as in Example 1, except that the composition of the blend was changed as follows. The resulting integrally molded article of a vulcanized sheet and a resin film was evaluated in the same manner as in Example 1. The results are set forth in Table 3.

### Composition of blend (Table 2)

| | |
|---|---|
| FKM2 | 100 parts by weight |
| Carbon black (N990) | 1 part by weight |
| 2,5-Dimethyl-2,5-di(t-butylperoxy)hexane | 1 part by weight |
| Triallyl isocyanurate | 3 parts by weight |

### Comparative Example 2

An integrally molded article of a vulcanized sheet and a resin film was obtained in the same manner as in Example 1, except that the composition of the blend was changed as follows. As a fluorine-containing rubber (FKM3), VitonA32J (containing vinylidene fluoride and hexafluoroethylene, available from DuPont Performance Elastomers K.K.) was used. The resulting integrally molded article of a vulcanized sheet and a resin film was evaluated in the same manner as in Example 1. The results are set forth in Table 3.

Composition of blend (Table 2)

| | |
|---|---|
| FKM3 | 100 parts by weight |
| Carbon black (N990) | 1 part by weight |
| Magnesium hydroxide | 1 part by weight |

[Table 1]

**Table 1**

| | FKM 1 | FKM 2 | FKM 3 (*1) |
|---|---|---|---|
| Vinylidene fluoride (part(s) by weight) | 57 | 57 | ○ |
| Tetrafluoroethylene (part(s) by weight) | 23 | 23 | |
| Hexafluoropropylene (part(s) by weight) | 20 | 20 | ○ |
| CF₂=CF-CE=CF₂ (part(s) by weight) | 1 | | |
| 1-Bromo-2-iodoperfluoroethane (% by mol) | 0.5 (*2) | 0.5 (*3) | |

| | | | |
|---|---|---|---|
| *1: FKM 3 (Viton A32J available from DuPont Performance Elastomers K.K.) contains vinylidene fluoride and hexafluoroethylene. *2: The amount of 1-bromo-2-iodoperfluoroethane added is expressed in % by mol based on 100% by mol of the total of vinylidene fluoride, tetrafluoroethylene, hexafluoropropylene and a fluorine-containing diene. *3: The amount of 1-bromo-2-iodoperfluoroethane added is expressed in % by mol based on 100% by mol of the total of vinylidene fluoride, tetrafluoroethylene and hexafluoropropylene. | | | |

[Table 2]

**Table 2 unit: part(s) by weight**

| | Example 1 | Comp. Ex. 1 | Comp. Ex. 2 |
|---|---|---|---|
| FKM 1 | 100 | | |
| FKM 2 | | 100 | |
| FKM 3 (Viton A32J) | | | 100 |
| Carbon black (N990) | 2 | 1 | 1 |
| Magnesium hydroxide | | | 3 |
| 2,5-Dimethyl-2,5-di(t-butylperoxy)hexane | 0.5 | 1 | |
| Triallyl isocyanurate | 2 | 3 | |

[Table 3]

**Table 3**

| | Example 1 | Comp. Ex. 1 | Comp. Ex. 2 |
|---|---|---|---|
| Ordinary state properties | | | |
| Hardness (durometer A) | 55 | 55 | 58 |
| Tensile strength (MPa) | 16.8 | 22.0 | 7.90 |
| Elongation (%) | 360 | 350 | 300 |
| Acid resistance | AA | AA | BB |
| 150°C, 1000 hrs, | no change of rubber | no change of rubber | roughened rubber |
| 50% H₃PO₄ aq. immersion | surface | surface | surface |
| Moldability | AA | BB | AA |
| | no tack in air-vent area, no separation of rubber | tack in air-vent area, separation of rubber | no tack in air-vent area, no separation of rubber |

### INDUSTRIAL APPLICABILITY

By the use of the fluororubber composition for cell seals of fuel cells according to the invention for a cell seal of a fuel cell, separation of a fuel cell gasket from a resin film or a carbon separator can be prevented. On that account, quality and productivity of a cell seal of a fuel cell can be improve. Moreover, production of a cell seal of a fuel call having stable quality becomes possible.

## Claims

1. A fluororubber composition for cell seals of fuel cells, comprising:
aperoxide-crosslinkablefluorine-containingrubber (A) having a fluorine content of not less than 64% by weight and having a crosslinking site derived from a bromine-containing and/or iodine-containing compound,
an organic peroxide (B) in an amount of 0.3 to 6 parts by weight,
and
a polyfunctional group monomer (C) in an amount of 1 to 10 parts by weight,
said amount of each of the component (B) and the component (C) being based on 100 parts by weight of the fluorine-containing rubber (A),
wherein the fluorine-containing rubber (A) contains one or more fluorine-containing olefins and one or more fluorine-containing dienes of 4 to 10 carbon atoms, and
the total amount of the fluorine-containing dienes of 4 to 10 carbon atoms is in the range of 0.01 to 10 parts by weight based on 100 parts by weight of the total amount of the fluorine-containing olefines.

2. The fluororubber composition for cell seals of fuel cells as claimed in claim 1, wherein at least one of the fluorine-containing dienes of 4 to 10 carbon atoms is represented by the formula 1:
CF₂=CX-(Y)ₙ-CZ=CF₂ (1)
wherein X and Z are each independently a hydrogen atom or a fluorine atom, n is an integer of 0 or 1, and Y is an oxygen atom, a difluoromethylene group of 1 to 6 carbon atoms, a perfluorocycloalkylene group of 4 to 6 carbon atoms or a divalent group represented by the formula 2:
-O-(CF₂O)ₓ-(CF₂CF₂O)_{y}-(CF₂CF(CF₃)O)_{z}- (2)
wherein x, y and z are each an integer of 0 to 2 and are numbers satisfying the condition of 0<x+y+z≤2.

3. The fluororubber composition for cell seals of fuel cells as claimed in claim 1 or 2, wherein at least one of the fluorine-containing olefins is represented by the formula 3:
CF₂=CXY (3)
wherein X is a hydrogen atom or a fluorine atom, and Y is a hydrogen atom, a chlorine atom, a fluorine atom, a trifluoromethyl group, a difluoromethyl group, a perfluoroalkoxy group of 1 to 3 carbon atoms or a group represented by the formula 4, with the proviso that when X is hydrogen, Y is also hydrogen,
-(CF₂)ₘ-COOM (4)
wherein m is an integer of 0 to 3, and M is a hydrogen atom, an alkyl group of 1 to 4 carbon atoms, a sodium atom or a potassium atom.

4. The fluororubber composition for cell seals of fuel cells as claimed in any one of claims 1 to 3, wherein at least one of the fluorine-containing olefins is vinylidene fluoride.

5. A cell seal of a fuel cell, having a fuel cell gasket obtained by crosslinking the fluororubber composition for cell seals of fuel cells as claimed in any one of claims 1 to 4.
